# EUROPEAN PATENT SPECIFICATION

(11) **EP 1 720 314 B1**
(45) Date of publication and mention of the grant of the patent: **06.09.2017**
(21) Application number: 06009357.2
(22) Date of filing: 05.05.2006
(51) Int. Cl.: H04L 29/06, H04N 1/00, G03D 15/00, G06Q 10/00, H04L 29/08

(54) **Print production processing apparatus and method, and print distribution processing system and method**
Vorrichtung und Verfahren zum Ausführen einer Abdrücke-Herstellung und System und Verfahren zum Ausführen einer Abdrücke-Verteilung
Dispositif et procédé de traitement de production d'impressions et système et procédé de traitement de distribution d'impressions

(30) Priority: 06.05.2005 JP 2005134802
(43) Date of publication of application: 08.11.2006
(73) Proprietor: FUJIFILM Corporation, Minato-ku Tokyo (JP)
(72) Inventor: Kito, Eiichi, Kaisei-machi, Ashigarakami-gun, Kanagawa (JP)
(74) Representative: Klunker IP Patentanwälte PartG mbB

(56) References cited:
- JP-A- 2004 139 387
- JP-A- 2004 164 184
- JP-A- 2005 092 530
- US-A1- 2002 109 854
- US-A1- 2004 159 255
- US-B1- 6 657 702

## Description

### BACKGROUND OF THE INVENTION

The present invention relates to print production processing apparatus and method according to the preamble of claim 1 and claim 4, respectively. They are used for receiving a photographic print production order through a network such as the Internet, producing photographic prints corresponding to the order, and providing the produced photographic prints to a customer. It also relates to a technique for distributed print-processing for making it possible to provide such photographic print service in a wide area with efficiency while maintaining convenience for customers.

Up to now, orders for production of photographic prints from images photographed with digital cameras or the like have been placed with a method with which customers bring recording media recording image data of the photographed images in mini-lab stores or the like and place the orders, or a method with which the customers insert the recording media into print order receivers installed in the mini-lab stores or the like and place the orders by making designations of print order images, designations of the numbers of prints to be made, and the like by themselves.

In addition, in recent years, the photographic print production orders have also been placed with a method with which the customers place the orders by transmitting order contents, such as image data to be printed, the numbers of the prints, and the sizes of the prints, to a print service company through the Internet using personal computers at home. In particular, the number of customers, who place orders using the Internet-based print order placing method, is increasing because with this method, a necessity for the customers to visit mini-lab stores or the like for order placing is eliminated and it becomes possible for the customers to place the orders without haste at their convenient times regardless of business hours of the mini-lab stores or the like, and therefore convenience for customers is improved.

Print orders placed through a network, such as the Internet, are processed at a large laboratory having a high print processing capability and produced prints are delivered to agents such as mini-lab stores, photo stores, or convenience stores, which have been designated by orderers. The orderers visit the mini-lab stores or the like that have been designated and receive the prints thereat. In such the system, it becomes possible to unify order procedures (access destination on the Internet and the like) and data management even when a service area is widened. In addition, when the agents are scattered in the service area, the reception of the prints by the print orderers is also facilitated.

However, there is a problem in that as the service area is widened, times required for delivery of the finished products from the large laboratory to the agents in various locations are elongated.

In view of this problem, as a system for improving convenience for customers (print orderers) in a case of reception of prints that they have ordered through a network and for enabling provision of swift service to the customers by reducing the number of collections and deliveries of prints and films without losing advantages of the network photo service system such as easiness to understand an access destination and unified management of data, a system is also proposed in which print orders are collectively received at a service center, print processing corresponding to the orders is carried out at mini-lab stores in various locations, and orderers receive prints at mini-lab stores that are convenient for the orderers.

For instance, JP 11-154218 A discloses a system in which a service center for receiving print service orders and laboratories scattered in various locations are set to be communicable with each other through a network, a center server at the service center selects laboratories that are print output destinations in accordance with order information transferred from customers through the network, and print outputs are not performed at the center server but are assigned to the selected laboratories.

In reality, however, there are also many cases where no mini-lab stores exist at locations that are convenient for print orderers. In particular, when print orders have been placed through a network, only reception of prints as finished products is required, so when it is possible for print orderers to receive the prints at convenience stores or the like, which are located closer to the print orderers than mini-lab stores and serve as agents, convenience for print orderers is significantly improved.

On the other hand, in such a conventional system that performs print processing with a collective laboratory system for processing every Internet order at a large laboratory and delivers prints at agents in various locations, when a service area is widened and the received orders are increased, the efficiency of collection and delivery is lowered, longer delivery time is required, and it becomes impossible to flexibly meet delivery dates and times, thereby making it difficult to widen the service area.

In accordance with the preamble of claim 1 and claim 4, respectively, US-B1-6 657 702 discloses a print production processing apparatus and method, wherein plural prints of a certain image are produced together since such image is commonly ordered by different recipients. Therefore, according to this prior art the prints of the same image are continuously produced irrespective of the delivery method.

JP 2004 139387 A discloses an apparatus and method for sorting prints, but the document is silent about any specific sequence according to which the prints are sorted and produced. A similar prior art is shown in US 2002/109854 A1.

### SUMMARY OF THE INVENTION

An object of the present invention is to solve the problems of the conventional techniques described above and to provide a print production processing apparatus and method, for allowing a customer to place a print order through a network and receive prints that the customer has ordered in a simple manner and making it possible to improve the efficiency of print delivery at a service provider and provide the prints to the customer swiftly. Another object of the present invention is to make it possible to perform processing from reception of a print order to print production followed by ejection suited for delivery in a full automatic manner.

In order to attain the object described above, the present invention provides a print production processing apparatus, comprising: the features of claim 1.

Preferred embodiments are defined by the dependent claims.

Further, in order to attain the object described above, the present invention provides a print production processing method, comprising the steps of claim 4.

According to the present invention, with the construction in which the print orders are collectively received through the network at the center laboratory, it is made easy to understand an order destination (access destination on the network) and print order placement by customers is simplified. Also, with the construction in which the customers can receive prints at convenience stores or other agents that are scattered more than mini-lab stores, the reception of the prints by the customers is facilitated.

Also, with the construction in which, at base laboratories that are scattered geographically and are taking charge of agents in certain allocated areas, print production processing corresponding to orders is performed and prints are output in forms suited for delivery to respective agents, it becomes possible to improve the efficiency of print delivery at a service provider and provide the prints to the customers swiftly.

Further, by making it possible to perform processing from print order reception to print production followed by ejection a discharge suited for delivery in a full automatic manner, it is possible to alleviate workloads of order reception processing, print production processing, delivery preparation, and the like at the service provider.

### BRIEF DESCRIPTION OF THE DRAWINGS

In the accompanying drawings:
FIG. 1 is a conceptual diagram showing a schematic construction of an embodiment of a distributed print-processing system according to the present invention which implements the distributed print-processing method according to the present invention;
FIG. 2 is a flowchart of distributed print-processing executed by a server at a center laboratory 16;
FIG. 3 is a conceptual diagram showing a schematic construction of a base laboratory 18;
FIG. 4 is a flowchart of print-order-processing sequence determination by a work flow manager 30;
FIG. 5 is a table showing a collection and delivery route;
FIG. 6 is a table showing orders;
FIG. 7 is a table showing processing sequence; and
FIG. 8 is a schematic diagram showing a schematic construction of a printer/packer 34.

### DETAILED DESCRIPTION OF THE PREFERRED EMBODIMENTS

The print production processing apparatus and method, and the distributed print-processing system and method according to the present invention will be described below in detail based on preferred embodiments with reference to the accompanying drawings.

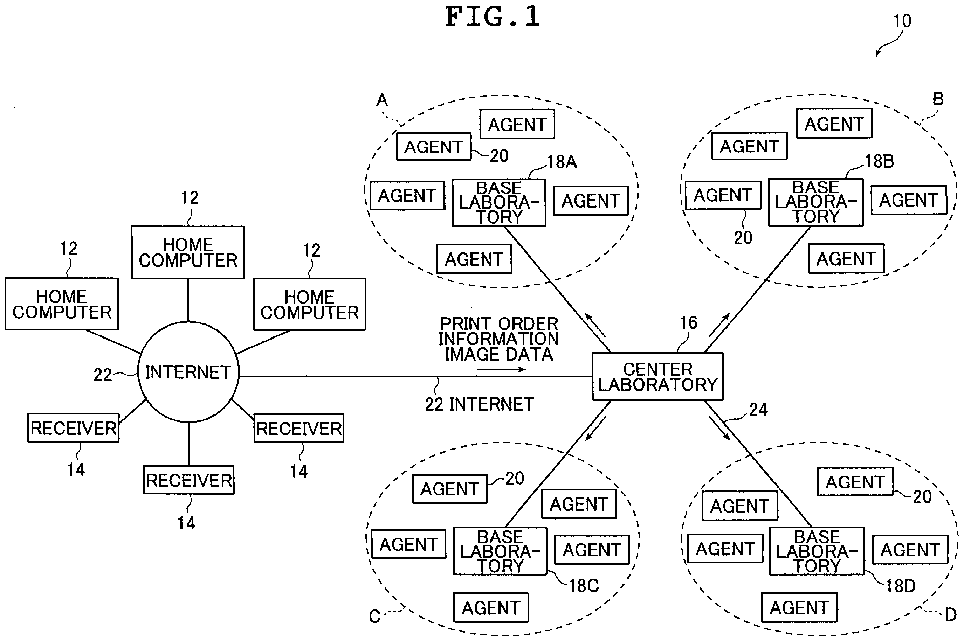

FIG. 1 is a conceptual diagram showing a schematic construction of an embodiment of the distributed print-processing system according to the present invention that implements the distributed print-processing method according to the present invention.

A distributed print-processing system 10 shown in FIG. 1 is a system for receiving a print order at a center laboratory through the Internet, acquiring print order information and image data, and producing prints corresponding to the print order information at a mini-laboratory that takes charge of an agent selected by a print orderer. The distributed print-processing system 10 includes home computers 12 and print order receivers 14 that each serves as a print order reception apparatus, a center laboratory 16, base laboratories 18 (18A, 18B, 18C, and 18D), agents 20 located in areas A, B, C, and D that the base laboratories 18 (18A, 18B, 18C, and 18D) are respectively taking charge of, a network 22 for connecting the home computers 12 and the print order receivers 14 to the center laboratory 16, and networks 24 for connecting the center laboratory 16 to the respective base laboratories 18.

It should be noted that in the illustrated example, a service area of the distributed print-processing system 10 is divided into the four areas A, B, C, and D, but the number of the areas is not specifically limited. For instance, when the service area of the distributed print-processing system 10 is set as the whole Kanto region, the areas (A, B, C, D, ···) can be set as divided areas such as the eastern part of Tokyo Metropolis, the western part of Tokyo Metropolis, Saitama Prefecture, and Kanagawa Prefecture.

The home computer 12 is a personal computer that is installed at home, a workplace, or the like and is capable of performing information transmission and reception by being connected to the Internet or another network. That is, the home computer 12 includes a display device for displaying images, a print order screen, and the like and an input device, such as a mouse and a keyboard with which operations for inputting print order information and transmitting image data and the print order information are performed.

The home computer 12 displays the print order screen on the display device by connecting to (accessing) a print order page made public on the Internet by a print service provider, for instance. Then, through operations of the input device, image data whose prints are to be ordered is uploaded, necessary information is inputted into predetermined fields of the print order screen as the print order information, and the image data and the print order information are transmitted to the center laboratory 16 through the network 22.

It should be noted that the home computer 12 is not limited to the personal computer but may be a digital camera, a portable telephone, or the like having a display device, an input device, and a communication function.

The print order receiver 14 is a machine dedicated to print order placement and is installed at storefront or inside of a store such as a mini-lab store, a photo store, a convenience store, a station, or a large shopping center. The print order receiver 14 is provided with a display device, an input device such as a keyboard or a touch panel, a driver for recording media (memory cards, optical disks, magnetic disks, or the like) storing image data, a terminal for connection with a digital camera or a portable telephone with a camera, and the like.

The print order receiver 14 displays an order screen on the display device, reads image data from a recording medium inserted into the media driver, a connected digital camera, or the like in response to operations of the input device, receives input of necessary information into predetermined fields of the print order screen as print order information, and transmits the image data and the print order information to the center laboratory 16 through the network 22.

The print order information includes information showing the numbers of prints to be made, the sizes of the prints, delivery date and time (which may be determined by a print orderer as a desired delivery date and time or set by a print service provider), a contact address or an identification code of the print orderer, and a method for receiving finished prints (print delivery method). The home computer 12 or the print order receiver 14 calls on the print orderer to input the information on the order screen.

As the print delivery method, a method with which the print orderer receives the prints at an agent that is convenient for the print orderer, a method with which the print orderer receives the prints by mail or home delivery service, and the like are selectable.

The center laboratory 16 is a laboratory for managing the print service in a wide area in which print service is provided by the distributed print-processing system 10, and is connected to all of the base laboratories 18 (18A, 18B, 18C, and 18D) located in respective areas that are the divided areas A, B, C, and D of the service area through the networks 24.

The center laboratory 16 includes a server (not shown) and records the print order information and the image data sent from the home computer 12 or the print order receiver 14 into the server. Next, in accordance with print delivery method information contained in the print order information of each print order, the center laboratory 16 selects one of the base laboratories 18 and transmits the print order information and the image data to the selected base laboratory 18.

It should be noted that the center laboratory 16 may have a function of the base laboratory 18 in addition to the function described above.

Here, the print delivery method information is information showing an agent at which the print orderer desires to receive the prints, so the print order information and the image data are sent to the server of the base laboratory that takes charge of the agent desired by the orderer for the print reception.

Also, when the print delivery method information is information showing that reception by mail is desired, the print order information and the image data are sent to a base laboratory that performs print processing for delivery by mail. The print processing for the delivery by mail may be performed by providing a dedicated base laboratory 18 or may be performed at the center laboratory 16. Alternatively, one of the base laboratories 18 that takes charge of a certain area may perform both of print processing for the area and the print processing for the delivery by mail. For instance, when the center laboratory 16 manages data (order information data, image data, and the like) concerning every print order in the service area of the distributed print-processing system 10, the center laboratory 16 is a large laboratory as compared with the base laboratories 18 in ordinary cases. Therefore, in this case, the center laboratory 16 may perform the print processing for the delivery by mail.

Each base laboratory 18 is a laboratory constituting the print production processing apparatus according to the present invention, receives the print order information and the image data sent from the center laboratory 16, and carries out print production processing corresponding to the order. The base laboratory 18 is a laboratory that produces prints and sorts them in a state suited for efficient delivery based on delivery information concerning delivery of finished prints to respective agents 20 that the base laboratory 18 is taking charge of. A construction of the base laboratory 18 will be described in detail later.

The agent 20 is one of many agents that are scattered in the service area of the distributed print-processing system 10 and undertake finished print delivery work. Various stores, such as mini-lab stores, photo stores, convenience stores, station stands, shops and supermarkets, can undertake the work as the agents 20 and it is sufficient that the agents 20 are located with appropriate distances thereamong being convenient for customers in respective areas. The agents 20 are grouped to correspond to the divided areas A, B, C, and D of the service area of the distributed print-processing system 10 and are connected to one of the base laboratories 18A, 18B, 18C, and 18D, respectively, located in the respective areas through the network 24.

It is sufficient that the Internet that is widely spread is used as the network 22 that connects the home computer 12 and the print order receiver 14 to the center laboratory 16, but the network 22 may be a line dedicated to photograph order placement. In particular, it is also preferable that the network 22 that connects the print order receiver 14 that is a print order dedicated machine to the center laboratory 16 is a dedicated line for high-speed transfer of image data and the like. Here, it does not matter whether the network 22 is a wired network or a wireless network.

Similarly, it is possible to use an arbitrary network such as the Internet, as the network 24 that connects the center laboratory 16 to the base laboratory 18, and it is also preferable that the network 24 is a dedicated line for high-speed transfer of image data and the like.

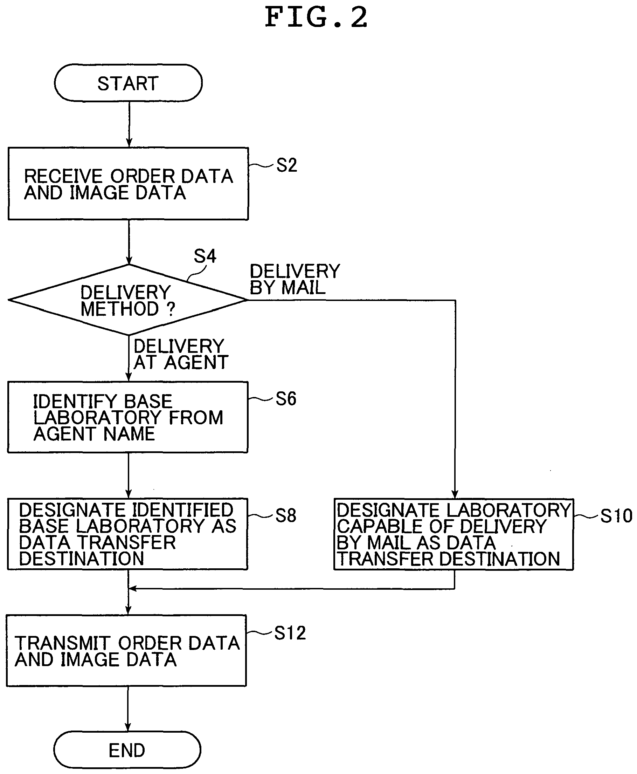

Next, distributed print-processing by the center laboratory 16 in the distributed print-processing system 10 will be described. FIG. 2 shows a distributed print-processing flow executed by the server of the center laboratory 16.

On receiving print order information (order data) and image data (Step S2), the server of the center laboratory 16 judges which one of delivery at an agent and delivery by mail has been designated with reference to delivery method information contained in the print order information (Step S4).

In the case of the delivery at an agent, the server identifies the base laboratory 18 that takes charge of the agent with reference to identification information of the agent such as the name of the agent or the code of the agent (Step S6). Next, the server designates the identified base laboratory 18 as a data transfer destination (Step S8) and transmits the print order information (order data) and the image data to the base laboratory 18 (Step S12).

On the other hand, when having found, as a result of the judgment in Step S4, that the designated print delivery method is the delivery by mail, the server designates a laboratory capable of mail delivery processing (such as the center laboratory 16 or a specific base laboratory 18) as the data transfer destination (Step S10) and transmits the print order information (order data) and the image data to the laboratory (in the case of the center laboratory 16, to a processing portion thereof) (Step S12).

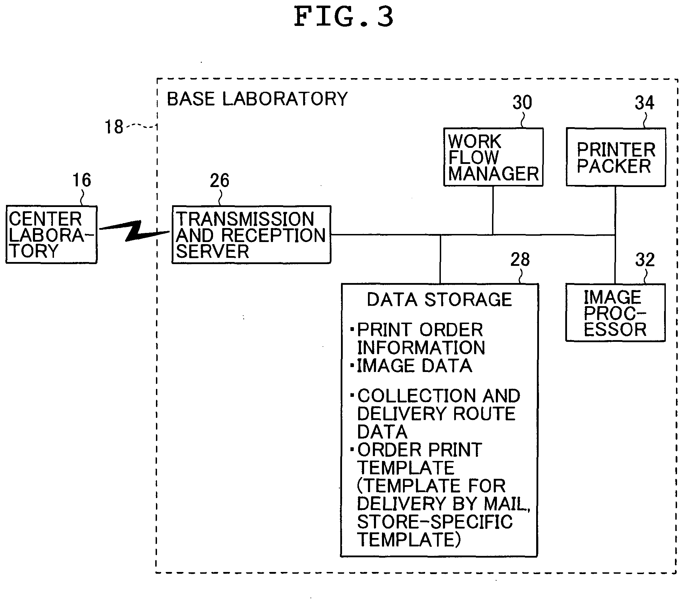

Next, the base laboratories 18 that are an embodiment of the print production processing apparatus according to the present invention that implements the print production processing method according to the present invention will be described. Note that the base laboratories 18A to 18D have the same construction, so one of the base laboratories 18 will be described as a representative. FIG. 3 is a conceptual diagram showing a schematic construction of the base laboratory 18.

The base laboratory 18 shown in FIG. 3 is a laboratory that receives print order information and image data sent from the center laboratory 16, produces prints corresponding to the print order information, and outputs the produced prints as being sorted by orders based on delivery information. The base laboratory 18 includes a transmission and reception server 26, a data storage 28, a work flow manager 30, an image processor 32, and a printer/packer 34.

Here, the delivery information is information showing a print delivery method designated by a print orderer or is information showing a delivery order to the agents set in advance at each base laboratory 18 as well as the print delivery method information.

The transmission and reception server 26 receives the print order information and the image data sent from the center laboratory 16. Here, the transmission and reception server 26 may be a server that also can transmit data from the base laboratory 18 to the center laboratory 16. As the data transmitted from the base laboratory 18 to the center laboratory 16, information used for distributed print-processing at the center laboratory 16, such as information about the agents that the base laboratory 18 is taking charge of, is cited as an example.

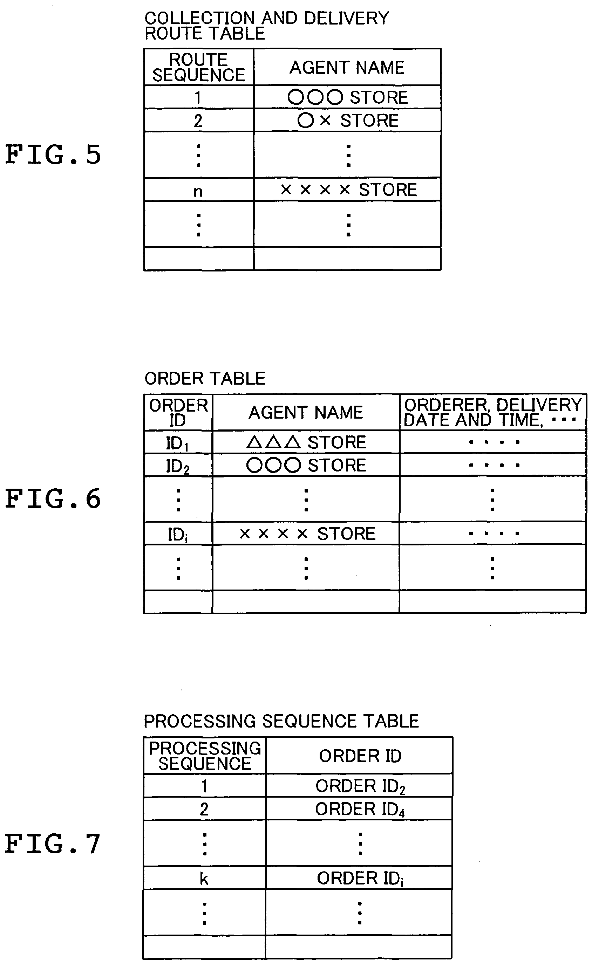

The data storage 28 organizes the print order information and the image data transmitted from the center laboratory 16 and received by the transmission and reception server 26 on an order table (FIG. 6) to be described later and stores them by order IDs. The data storage 28 also stores collection and delivery route data that is finished print delivery information and order print templates.

The collection and delivery route data is data showing a sequence of making the rounds of the respective agents 20 in an area that the base laboratory 18 is taking charge of, and is stored in advance as a collection and delivery route table (FIG. 5) to be described later.

Each order print template is a template for producing order prints on which identification information of the respective print orders has been recorded.

Each order print is a print that plays at least the role of an order slip that has description including information such as the name of a print orderer and an order code (order ID), with which the print orderer and the print service provider can identify a corresponding print order. Also, on the order print, based on the print delivery method information, agent identification information is written in the case of a print order corresponding to delivery at an agent and mail destination information (address, name, zip code, and the like) is written in the case of an order corresponding to delivery by mail.

Further, in a case payment is made at the time of reception of prints, a charge for print service is indicated on the order print. Still further, order reception date and time, a customer ID, customer contact information, file names of images whose prints have been produced, the numbers of the prints, and the like may be written on the order print with characters, symbols, barcodes, and the like.

The information recorded on the order print can be acquired from the print order information.

The order print template is a template that stipulates a layout of such the order print. As to the order print template, different templates are prepared for delivery at an agent and delivery by mail. For instance, it is also preferable that the order print template for delivery by mail has a destination display form with which it is possible to mail the print as it is.

Also, a common order print template may be used for all agents 20 but it is also preferable that different formats can be registered for the respective agents 20. In this case, it becomes possible to present features of respective agents by setting different formats and colors for the respective agents 20. In addition, it also becomes possible to describe information for attracting customers such as advertisements by the agents 20.

The work flow manager 30 collects the print order information and the image data corresponding to the order information stored in the data storage 28 by the agents 20 based on the print delivery information contained in the print order information. That is, a processing sequence table is created so that among print orders stored in the data storage 28 to be processed, print orders, for which the same agent 20 has been designated in the print delivery information, are processed in succession.

More preferably, the work flow manager 30 prepares print data based on the collection and delivery route data of the agents 20 stored in the data storage 28 so that prints are produced in sequence of collection and delivery route. That is, a processing sequence table is created in which print orders designating the same agent 20 are put together to be processed in succession, and in which further the print orders are rearranged in a delivery sequence to the agents 20.

With reference to the processing sequence table, print production and sorting at the printer/packer 34 are controlled.

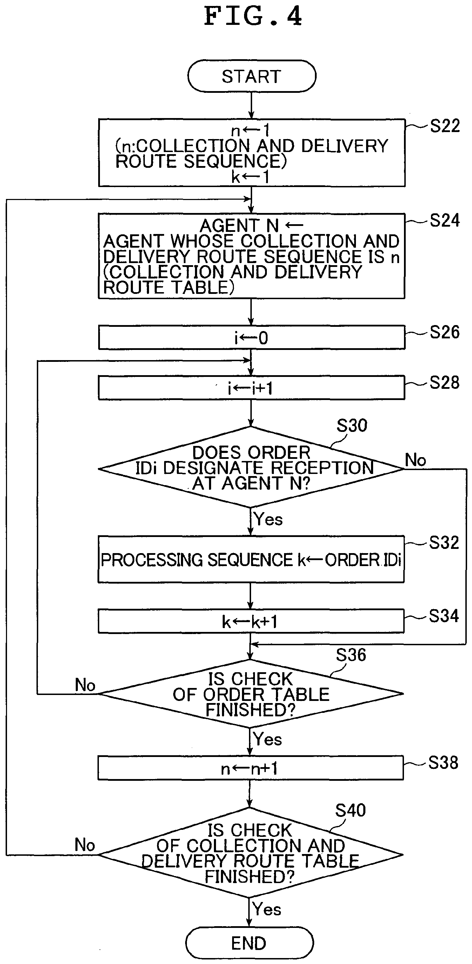

Such the print-order-processing sequence determination by the work flow manager 30 at the base laboratory 18 will be described in more detail with reference to FIG. 4. FIG. 4 is a flowchart showing the print-order-processing sequence determination by the work flow manager 30.

Also, FIG. 5 shows the "collection and delivery route table" that determines the sequence of collection and delivery route to the respective agents 20 under the base laboratory 18. The collection and delivery route table is set in advance for each base laboratory 18 (18A, 18B, 18C, and 18D) and is stored in the data storage 28.

FIG. 6 shows an "order table" that arranges and organizes unprocessed print order information and image data transmitted from the center laboratory 16 and received by the transmission and reception server 26 in an arbitrary sequence such as a reception sequence, and is stored in the data storage 28. The print order information and the image data are associated with order IDs (which are integers starting from "1") by orders.

FIG. 7 shows a "processing sequence table" created through the print-order-processing sequence determination by the work flow manager 30 and showing a print processing sequence at the base laboratory 18.

First, in Step S22, the work flow manager 30 initializes each of parameters that are the collection and delivery route sequence n (n=1, 2, 3, ···, n, ···) and the processing sequence k (k=1, 2, 3, ···, k, ···) set in advance to "1".

Next, in Step S24, the work flow manager 30 refers to the collection and delivery route table and sets an agent whose collection and delivery route sequence is "n", as an agent "N". For instance, in the case of the collection and delivery route table of FIG. 5, when "n=1", a "ooo" store is designated as "N". As a result, through processing from Step S28 to Step S36, print orders corresponding to delivery to the "ooo" store are extracted from among print orders listed on the order table (FIG. 6).

Next, in Step S26, "i" that is an order ID identifier is initialized to "0". Then, in Step S28, "i" is sequentially incremented by one from "1", that is, i=1, 2, 3, ..., to repeat processing from Step S28 to Step S36.

First, in Step S30, the work flow manager 30 refers to the order table (FIG. 6) and judges whether the order "IDᵢ" is an order for which reception at the agent N (in this example, when n=1, agent N="ooo" store) has been designated. Then, when the reception at the agent N has been designated for the order, a result of the judgment becomes affirmative (Yes) and the work flow manager 30 proceeds to Step S32. On the other hand, when not, the judgment result becomes negative (No) and the processing proceeds to Step S36.

Then, the work flow manager 30 records the order "IDᵢ", for which the affirmative judgment result (Yes) has been obtained in Step S30, in a field corresponding to the processing sequence "k" of the processing sequence table (FIG. 7) in Step S32 and advances to the next recording field of the processing sequence table by defining as "processing sequence k=k+1" in Step S34.

In the illustrated example, the order ID₁ is not an order whose designated agent is the "ooo" store, so the work flow manager 30 proceeds to Step S36 without recording the order ID₁ in the processing sequence table. Then, the next order ID₂ is an order whose designated agent is the "ooo" store, so the work flow manager 30 records the order ID₂ in a field corresponding to a processing sequence "1" of the processing sequence table and proceeds to Step S36. Following this, the same processing is repeated for all orders IDᵢ on the order table.

In Step S36, the work flow manager 30 judges whether the check has been made for all orders on the order table. Then, when the check has not been made for all the orders, a result of this judgment becomes negative (No), so the work flow manager 30 returns to Step S28 and continues the extraction of the orders for which the reception at the agent "N" has been designated. On the other hand, when the check has been made for all the orders, the judgment result becomes affirmative (Yes), so the work flow manager 30 proceeds to Step S38.

In Step S38, the work flow manager 30 advances to the next field of the collection and delivery route table by defining as "route sequence n=n+1". In the illustrated example, print orders that should be delivered to the "ox" store corresponding to "n=2" are extracted and are recorded on the processing sequence table in the same manner as above.

In Step S40, the work flow manager 30 judges whether the check has been made for all agents on the collection and delivery route table (FIG. 5). When the check has not been made for all the agents, a result of this judgment is negative (No), so the work flow manager 30 returns to Step S24 and continues the extraction of the orders for which the reception at the agent "N" has been designated. On the other hand, when the check has been made for all the agents, the judgment result becomes affirmative (Yes), so the work flow manager 30 ends the print-order-processing sequence determination.

As a result of the processing described above, the processing sequence table on which all print orders (print order information and image data corresponding to the order information) stored in the data storage 28 and recorded on the order table have been rearranged by agents in sequence of the collection and delivery route based on the print delivery information contained in the print order information, is created and print-order-processing sequences are determined.

It should be noted that when the rearrangement of the collection and delivery route sequences is not required, there occurs no problem even when the collection and delivery route table of FIG. 5 is not used. In this case, it is sufficient that print orders of the same agent are put together in an arbitrary agent sequence. More specifically, for instance, the order table is searched for the recorded agents sequentially from the top.

. Also, needless to say, in addition to the agents 20, the base laboratory 18 may conduct the print delivery work.

The work flow manager 30 sends print production data from the data storage 28 to the image processor 32 and the printer/packer 34 in the processing sequence given on the processing sequence table created in the manner described above.

The print-order-processing sequence determination described above may be performed at a predetermined timing or time at which print production will be finished before a collection time, or may be performed each time a predetermined number of print orders have been recorded in the data storage 28, for instance. Also, when the print-order-processing sequence determination has been performed, a new processing sequence table subsequent to an already-created processing sequence table may be created before processing print orders recorded on the already-created table. Alternatively, one processing sequence table may be updated so as to perform processing of print orders including the print orders listed on the already-created processing table.

On the other hand, when the base laboratory 18 or the agent 20 is a laboratory that performs both of print processing for delivery at an agent and print processing for delivery by mail, the work flow manager 30 classifies orders into orders for the delivery at an agent and orders for the delivery by mail based on the print delivery method information contained in the print order information prior to the print-order-processing sequence determination, and then performs the same processing as described above to the orders for the delivery at an agent. Alternatively, classification may be performed by extracting orders for the delivery by mail in the print-order-processing sequence determination. In either case, the orders for the delivery by mail are processed collectively.

It should be noted that when the base laboratory 18 is a laboratory dedicated to the print processing for the delivery by mail or when the center laboratory 16 performs only the print processing for the delivery by mail as print processing, it is not necessary for the work flow manager 30 to carry out the print-order-processing sequence determination.

Next, the image processor 32 generates print image data by performing image processing on the image data sent from the data storage 28 by the work flow manager 30. The image processing carried out by the image processor 32 is not specifically limited, and it is possible to use various image processing such as image enlargement/reduction (electronic magnification processing), gradation correction, color/density correction, color saturation correction, and sharpness processing. It is sufficient that each image processing described above is executed with a known method.

Also, with reference to the print delivery method information (identification information of a designated agent/information designating delivery by mail) contained in the print order information sent together with the image data, for each print order, the image processor 32 selects an order print template for the designated agent or an order print template for the delivery by mail. Then, the image processor 32 reads the selected template from the data storage 28 and generates data for recording onto an order print for delivery at the designated agent or an order print for the delivery by mail based on the print order information.

The image processor 32 transmits the generated photographic print image data and order print data to the printer/packer 34. Also, each time having supplied the last data (print image data or order print data) in image data for an order, the image processor 32 outputs sorting information indicative of the end of the order to the printer/packer 34.

The printer/packer 34 produces prints and order prints corresponding to the print order information in a transmission sequence from the image processor 32 and sorts the produced finished prints and order prints by orders. Preferably, the printer/packer 34 packs the prints sorted by orders and ejects the packed prints as print pack products. When doing so, the printer/packer 34 packs an order print on the top or bottom of the finished prints for an order using a transparent or semitransparent packing material such that a recording surface of the order print faces outward, thereby making it possible to identify the prints of each order and obtain various information such as agent information or mail destination information and fee information, in a packed state.

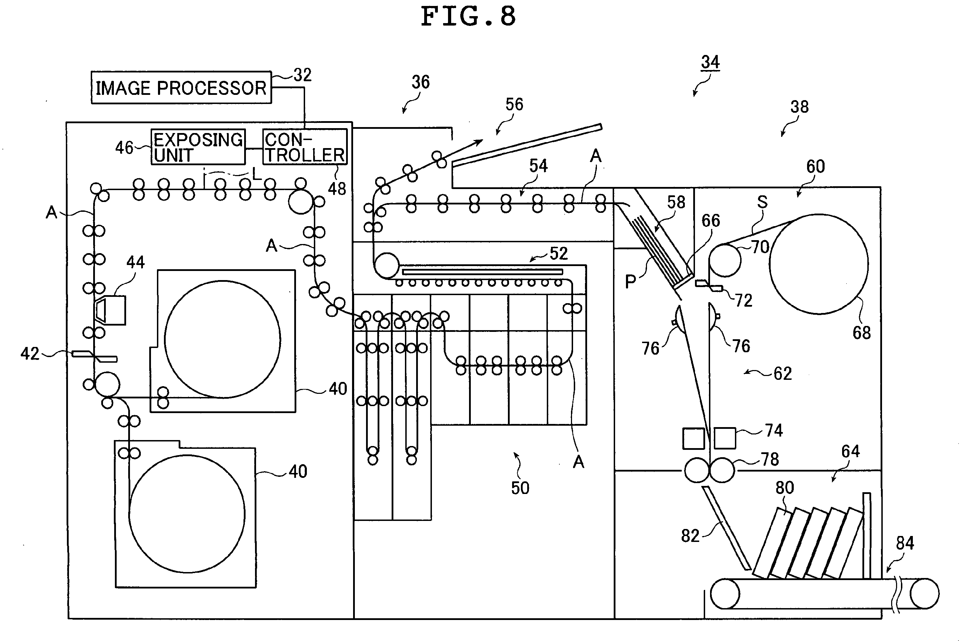

An example of a printer/packer that is suitably used as the printer/packer 34 described above will be described with reference to FIG. 8.

It should be noted that in the following description, as a printer portion of the printer/packer 34, a digital photo printer that reproduces visible images corresponding to image data by forming latent images through exposure of a photosensitive material based on the image data and then development processing will be described as an example, but the printer/packer 34 constituting the base laboratory 18 (and the center laboratory 16) according to the present invention in the distributed print-processing system 10 according to the present invention is not limited to this. That is, as the printer portion, it is possible to use those adopting various recording systems such as an electrophotographic system and an ink jet recording system, which make it possible to form images in accordance with image data. Also, an image recording medium used in the distributed print-processing system 10 is not specifically limited and plain paper, coated paper, films, various fibrous sheets, and the like are usable as long as recording is possible with a recording system used in the distributed print-processing system 10. Further, a packer portion of the printer/packer 34 is not limited to an example described below and it is possible to use various packers and packing materials.

FIG. 8 is a schematic diagram showing a schematic construction of the printer/packer 34 of this embodiment. The printer/packer 34 shown in FIG. 8 includes a printer portion 36 and a packer portion 38. The printer portion 36 obtains finished prints P by forming latent images through exposure of a photosensitive material (printing paper) A in accordance with print image data and order print data supplied from the image processor 32, performing predetermined wet development, and then drying. The packer portion 38 produces print packs 80 by sorting the finished prints by print orders and packing the sorted prints (putting the prints in bags).

It is possible to load two magazines 40, each of which accommodates a photosensitive material roll obtained by winding the photosensitive material A, into the printer portion 36. The photosensitive material A is conveyed through a predetermined position at a predetermined speed by ordinary conveying means, such as conveying roller pairs and a conveying guide, in each processing step until the photosensitive material A is ejected from the magazines 40.

The photosensitive material A is drawn out from the magazines 40, is cut by a cutter 42 in accordance with a print size, is subjected to back printing by a back printer 44, and then is supplied to a predetermined exposing position.

The image data (print image data and order print image data) from the image processor 32 is supplied to the controller 48.

The controller 48 controls an exposing unit 46 in accordance with the supplied image data.

The exposing unit 46 deflects, in a main scanning direction, an optical beam L (recording light) modulated in accordance with the image data to make the optical beam L incidence at the exposing position. On the other hand, the photosensitive material A is conveyed for scanning in an auxiliary scanning direction orthogonal to the main scanning direction while being arranged at the exposing position. Accordingly, the photosensitive material A is two-dimensionally scan-exposed by the optical beam L modulated in accordance with the images, and latent images are recorded on the photosensitive material A. The photosensitive material A, on which the latent images have been recorded, is sequentially supplied to a developing portion 50.

The photosensitive material A, which has the latent images formed thereon, is first conveyed to respective processing vessels of the developing portion 50 in which the photosensitive material A is subjected to development, bleaching/fixing, and rinsing in succession. Next, the photosensitive material A is dried by a heater or the like at a drying portion 52 and is ejected to the packer portion 38 (print stacking portion 58) as the finished prints P through a conveying portion 54.

It should be noted that large-sized prints that are not to be packed are ejected from the drying portion 52 to a large size print ejecting portion 56 located above without being conveyed through the conveying portion 54. It is sufficient that conveying path is switched with a known method such as a method using a switching guide.

The packer portion 38 is a portion for stacking and packs prints by orders in accordance with the print order information and includes a print stacking portion 58, a packing sheet supply portion 60, a packing portion (product insertion/sealing portion) 62, and a product receiving portion 64.

A packing sheet S is a long tubular transparent sheet and is loaded into the sheet supply portion 60 as a packing material roll 68 wound in a roll shape. The packing sheet S wound out from the packing material roll 68 is conveyed through a predetermined path by a guide roll 70, a conveying roller pair (not shown), and the like.

The packing portion (product throwing-in/sealing portion) 62 includes a cutter 72 for cutting the packing sheet S into a predetermined length, a heat sealer 74 for heat-sealing a lower end portion as illustrated in the drawing of the cut packing sheet S, and an opener 76 for opening an upper end portion in the drawing of the cut packing sheet S.

The packing sheet S drawn out by a length appropriate for packing of the prints P is cut by the cutter 72. Also, a tip end portion in a conveying direction of the cut packing sheet S, that is, the lower end portion in the drawing thereof is heat-sealed by the heat sealer 74 and a bottom portion of a packing bag is formed. The bottom portion of the packing bag after the sealing is supported by a conveying roller pair 78 that is a nip roller pair and holding means (not shown) (such as nip rollers or a gripper).

The opener 76 is a device for opening the upper end portion as illustrated in the drawing of the cut packing sheet S, that is, an opening end portion of the tubular packing sheet S, and uses a suction device, a gripper, or the like for holding opposing portions of the opening end portion of the tubular packing sheet S and moving the respective portions apart from each other.

The packing sheet S is supported by the conveying roller pair 78 in the lower portion in a state where the lower end portion has been sealed, and waits for a product (finished prints P) to be inserted in a state where the upper end portion is held open by the opener 76. FIG. 8 shows a such state at the time of waiting.

The print P stacking portion 58 includes a stacking guide whose tip end (tip end in a direction in which the prints P are carried out) is downwardly inclined toward the opening portion of the packing sheet S opened by the opener 76. For the tip end portion of the stacking guide, an openable/closable stopper 66 is provided. The stopper 66 ordinarily closes the tip end of the stacking guide. Therefore, the prints P carried out from the conveying portion 54 are temporarily stacked in the stacking portion 58.

When it has been found that all prints P (including an order print) for an order have been stacked in the stacking portion 58 with reference to the sorting information sent from the image processor 32, the packer portion 38 opens the stopper 66, thereby putting the prints P in the packing portion 62 from the stacking portion 58. Then, the packer portion 38 closes the stopper 66 before the next prints P are ejected to the stacking portion 58.

It should be noted that completion of stacking all prints P for an order may be detected with reference to the print order information from the image processor 32 and signals from detector and counter for prints P arranged in appropriate portions of the printer portion 36 or the packer portion 38. Alternatively, the print stacking completion may be detected through detection of an order print produced and conveyed at the top or end of photographic prints by order print detection means.

The prints P dropped along the stacking guide through the opening of the stopper 66 are put in the packing sheet S waiting for the prints P in an opened state in the packing portion 62.

When the prints P for an order have been put in the packing sheet S, the opener 76 releases the packing sheet S. Then, the packing sheet S containing the prints P is conveyed downward as illustrated in the drawing by the conveying roller pair 78 and conveying means (not shown).

When the opening portion (upper end portion) of the packing sheet S has reached the position of the heat sealer 74, the conveying of the packing sheet S is temporarily stopped and the opening portion is heat-sealed by the heat sealer 74. As a result, a print pack 80 containing the prints P for an order is completed.

The print pack 80 is conveyed by the conveying roller pair 78, is guided by the guide 82, and is ejected to the product receiving portion 64.

The product receiving portion 64 includes a conveying portion 84, which is constituted of a belt conveyor and the like, and conveys print packs 80 to a product taking-out opening in sequence of ejecting to the product receiving portion 64.

Next, an operation of the distributed print-processing system 10 will be described.

When a print order has been placed from the home computer 12 or the print order receiver 14, print order information and image data corresponding to the print order are sent to the center laboratory 16.

The center laboratory 16 identifies a base laboratory 18, to which the received print order information and image data should be transmitted, with reference to print delivery method information contained in the print order information and transmits the print order information and the image data to the identified base laboratory 18. That is, when the delivery method information shows that delivery at an agent 20 has been designated, the print order information and the image data are transmitted to a base laboratory 18 that is taking charge of the agent 20. On the other hand, when the delivery method information shows that delivery by mail has been designated, the print order information and the image data are transmitted to a base laboratory 18 or an agent 20 that performs processing for the delivery by mail.

In the case of an order for which delivery at an agent has been designated, after having received the print order information and the image data from the center laboratory 16, the base laboratory 18 organizes and stores the received order data on the order table (see FIG. 6) in the data storage 28.

At a predetermined time or at the time when the data recorded on the order table has reached a predetermined amount, the print-processing sequence determination is carried out by the work flow manager 30, and data of each order on the order table is rearranged based on the print delivery information contained in the print order information, that is, delivery agent identification information such that orders, for which the same agent has been designated, are processed in succession. Also, as a result of this processing, print orders are rearranged in sequence of the collection and delivery route table (see FIG. 5) so that the orders are processed in sequence corresponding to the collection and delivery route.

When the print-processing sequence determination is ended and the processing sequence table (see FIG. 7) is created, the work flow manager 30 supplies the print order information and the image data from the data storage 28 to the image processor 32 in sequence of the processing sequence table.

On the other hand, in the case of an order for which delivery by mail has been designated, the base laboratory 18 receives the print order information and the image data from the center laboratory 16, stores the received information and data in the data storage 28, and supplies the stored information and data from the data storage 28 to the image processor 32 in an arbitrary sequence, such as a reception sequence, at a predetermined timing under control by the work flow manager 30.

The image processor 32 performs image processing on the received image data, generates data (image data) of an order print corresponding to the agent 20 or data (image data) of an order print for the delivery by mail based on the print order information, and transmits the data to the printer/packer 34.

The printer/packer 34 produces finished prints corresponding to each order and produces an order print corresponding to the order before or after the finished prints based on the processed image data and the order print data received from the image processor 32. Then, the printer/packer 34 sorts the finished prints and the order prints by orders, packs the sorted prints, and ejects the packed prints as the print packs 80.

The print packs created in the manner described above are arranged by agents 20, which the base laboratory 18 is taking charge of, and are further arranged in sequence of delivery to the agents 20. Therefore, delivery personnel may load the print packs 80 as ejected from the printer/packer 34 on a delivery car or the like, and deliver the print packs 80 in sequence of the arranged print packs 80 while making the rounds of the respective agents 20. As a result, it becomes possible to eliminate time and labor consumed by rearrangement of the print packs 80 and significantly alleviate a workload.

As described above, according to the distributed print-processing system 10, at the center laboratory 16 that has received a print order, a base laboratory 18 that performs print production processing is automatically determined based on print delivery method information contained in print order information, so it becomes possible to perform the print production processing at a base laboratory 18 that is taking charge of a designated agent 20, a base laboratory 18, or the center laboratory 16 that performs processing for delivery by mail and it becomes possible to automatically and optimally perform distributed-order processing.

Also, at each base laboratory 18, based on print delivery method information, it becomes possible to perform appropriate processing of each order such as selection of a predetermined order print template for the order, with reference to each one of delivery at an agent and delivery by mail which has been designated for the order.

Further, it is possible to, at each base laboratory 18, determine print processing sequences with reference to print delivery method information, preferably, information showing the sequence of the delivery route to the agents 20 as well as the print delivery method information, and produce prints by the agents 20 that the base laboratory 18 is taking charge of, preferably, in sequence of delivery route by orders. When the base laboratory 18 includes a packer for packing produced prints in addition to a printer for producing the prints, it is possible to produce print packs 80 packing finished prints together with an order print by delivery sequences and it becomes possible to deliver or mail the produced print packs 80 as they are.

Still further, it is possible to automatically process every step from print order reception to distributed print-processing (determination of a base laboratory 18 that performs processing), determining print production processing sequences corresponding to delivery destinations and delivery sequences, and print production and packing.

Therefore, it is possible to construct a print order reception/print processing system that requires little manpower and makes it possible to cover a wide area as a service area and is very convenient also for orderers.

It should be noted that in the above description, for ease of explanation, the home computers 12 or the print order receivers 14 at which print orders are placed and the agents 20 at which prints are delivered are described as separate entities. As a matter of course, however, the print order receivers 14 may be installed at the agents 20 or the base laboratories 18. In this case, as the agents 20 for reception of prints, it is possible to designate the agents 20 at which orders have been placed, as well as other agents 20.

In addition, the base laboratories 18 may also receive print order information and image data not from the center laboratory 16 but directly from the home computers 12 or the print order receivers 14 and may perform print production processing corresponding to orders.

For instance, when a relatively narrow region, in which sufficient service can be provided with one base laboratory 18, is set as a service area, print orders from the home computers 12 and the print order receivers 14 may be received at the base laboratory 18 and processed thereat in the same manner as above. In this case, it is possible to deliver respective finished prints to corresponding agents with efficiency, achieving both of improvement of print orderer convenience and improvement of processing efficiency.

The print production processing apparatus and method, and the distributed print-processing system and method according to the present invention are described in detail above. However, the present invention is not limited to the embodiments described above and it is of course possible to make various modifications and changes without departing from the gist of the present invention as defined by the claims.

## Claims

1. A print production processing apparatus, comprising:
a reception server (26) adapted to receive print order information and image data;
a storage means (28) adapted to store the print order information and the image data received by said reception server (26);
a print production means (34) adapted to produce prints corresponding to the print order information and the image data, to sort the produced prints every print order, and to eject the sorted prints; and
a control means (30) adapted to control print production and sorting by said print production means (34) based on information of a print delivery method contained in the print order information,
wherein said control means is adapted to control a print production sequence at said print production means based on the information of the print delivery method so that the prints are continuously produced in accordance with print orders corresponding to the same print delivery method, thereby being ejected every print order,
**characterized in that** said storage means (28) is also adapted to store information showing a delivery route sequence previously determined for print delivery destinations (20), and that
said control means (30) is further adapted to control a print production sequence at said print production means (34) based on said stored information showing the delivery route sequence so that the prints are produced every print order in a sequence corresponding to the delivery route sequence.

2. The apparatus according to claim 1, wherein:
said print production means (34) is adapted to produce an order print recording at least information for identifying a print order in response to the print production for the print order; and
said control means (30) is adapted to change at least one of recording contents and a format of the order print in accordance with the information of the print delivery method.

3. The apparatus according to any one of claims 1 or 2, wherein said print production means (34) is adapted to pack the sorted prints every print order and to eject the packed prints.

4. A print production processing method, comprising the steps of:
receiving print order information and image data;
producing prints corresponding to the print order information and the image data;
sorting the produced prints every print order;
ejecting the sorted prints,
wherein print production and sorting are controlled based on information of a print delivery method contained in the print order information, and
wherein the print production and the sorting are executed based on the information of the print delivery method so that the prints are continuously produced in accordance with print orders corresponding to the same print delivery method, thereby being ejected every print order,
**characterized in that** the print production is executed based on information showing a delivery route sequence determined previously for print delivery destinations (20) so that the prints are produced every print order in a sequence corresponding to the delivery route sequence.

5. The print production processing method according to claim 4, comprising the steps of:
producing an order print recording at least information for identifying a print order in response to the print production for the print order,
wherein at least one of recording contents and a format of the order print is changed in accordance with the information of the print delivery method.

6. The print production processing method according to claims 4 or 5, wherein the sorted prints every print order are packed and the packed prints ejected.

## Patentansprüche

1. Abzugherstellungs-Verarbeitungsvorrichtung, umfassend:
einen Empfangsserver (26), ausgebildet zum Empfangen von Abzugauftragsinformation und Bilddaten;
eine Speichereinrichtung (28), ausgebildet zum Speichern der Abzugauftragsinformation und der Bilddaten, die von dem Empfangsserver (26) empfangen wurden;
eine Abzugherstellungseinrichtung (34) ausgebildet zum Anfertigen von Abzügen entsprechend der Abzugauftragsinformation und den Bilddaten, zum Sortieren der hergestellten Abzüge gemäß jedem Abzugauftrag, und zum Ausstoßen der sortierten Abzüge; und
eine Steuereinrichtung (30), ausgebildet zum Steuern der Abzugherstellung und der Sortierung durch die Abzugherstellungseinrichtung (34) basierend auf Information über ein Abzugversendeverfahren, die in der Abzugauftragsinformation enthalten ist,
wobei die Steuereinrichtung dazu ausgebildet ist, eine Abzugherstellungsfolge in der Abzugsherstellungseinrichtung basierend auf der Information über das Abzugversendeverfahren derart zu steuern, dass die Abzüge kontinuierlich nach Maßgabe der Abzugaufträge entsprechend demselben Abzugversendeverfahren hergestellt werden, um bei jedem Abzugauftrag ausgestoßen zu werden,
**dadurch gekennzeichnet, dass** die Speichereinrichtung (28) außerdem ausgebildet ist zum Speichern von Information, die eine Versenderoutenfolge darstellt, die zuvor für Abzugs-Versendezielorte (20) festgelegt wurde, und dass die Steuereinrichtung (30) weiterhin ausgebildet ist zum Steuern einer Abzugherstellungsfolge in der Abzugherstellungseinrichtung (24) basierend auf der gespeicherten Information über die Versenderoutenfolge derart, dass die Abzüge für jeden Druckauftrag in einer Folge hergestellt werden, welche der Versenderoutenfolge entspricht.

2. Vorrichtung nach Anspruch 1, bei der
die Abzugherstellungseinrichtung (34) dazu ausgebildet ist, einen Auftragsabzug herzustellen, der mindestens Information zum Identifizieren einer Abzugauftragantwort an die Abzugherstellung für den Abzugauftrag aufzeichnet; und
die Steuereinrichtung (30) dazu ausgebildet ist, Aufzuginhalte und/oder ein Format des Auftragabzugs nach Maßgabe der Information über das Druckversendeverfahren zu ändern.

3. Vorrichtung nach einem der Ansprüche 1 oder 2, bei dem die Abzugherstellungseinrichtung (34) dazu ausgebildet ist, die sortierten Abzüge für jeden Abzugauftrag zu packen und die verpackten Abzüge auszustoßen.

4. Abzugherstellungs-Verarbeitungsverfahren, umfassend folgende Schritte:
Empfangen von Abzugautragsinformation und Bilddaten;
Herstellen von Abzügen entsprechend der Abzugauftragsinformation und den Bilddaten;
Sortieren der hergestellten Abzüge für jeden Druckauftrag;
Ausstoßen der sortierten Abzüge,
wobei die Abzugherstellung und -sortierung basierend auf Information über ein Abzugversendeverfahren gesteuert werden, das in der Abzugauftragsinformation enthalten ist, und
wobei die Abzugherstellung und die Sortierung ausgeführt werden auf der Grundlage der Information über das Abzugversendeverfahren derart, dass die Abzüge kontinuierlich nach Maßgabe von Abzugaufträgen hergestellt werden entsprechend dem gleichen Abzugversendeverfahren, um dadurch für jeden Druckauftrag ausgestoßen zu werden,
**dadurch gekennzeichnet, dass** die Abzugherstellung ausgeführt wird auf der Grundlage von Information, die eine Versenderoutenfolge zeigt, die vorab für Abzug-Versendezielorte (20) festgelegt wurde, so dass die Abzüge für jeden Abzugauftrag in einer Folge hergestellt werden, welche der Versende-Routenfolge entspricht.

5. Verfahren nach Anspruch 4, umfassend die Schritte:
Herstellen eines Auftragabzugs, welcher mindestens Information zum Identifizieren eines Abzugauftrags als Antwort auf die Abzugherstellung für den Abzugauftrag aufzeichnet,
wobei Aufzeichnungsinhalte und/oder ein Format des Auftragabzugs nach Maßgabe der Information des Abzugversendeverfahrens geändert wird.

6. Verfahren nach Anspruch 4 oder 5, bei dem die sortierten Abzüge für jeden Abzugauftrag verpackt werden und die verpackten Abzüge ausgestoßen werden.

## Revendications

1. Appareil de traitement de production d'impressions, comprenant :
un serveur de réception (26) apte à recevoir des informations d'ordre d'impressions et des données d'image ;
un moyen de stockage (28) apte à stocker les informations d'ordre d'impressions et les données d'image reçues par ledit serveur de réception (26) ;
un moyen de production d'impressions (34) apte à produire des impressions correspondant aux informations d'ordre d'impressions et données d'image, à trier les impressions produites à chaque ordre d'impressions, et à éjecter les impressions triées, et
un moyen de commande (30) apte à commander la production d'impressions, et à trier par ledit moyen de production d'impressions (34) sur la base d'informations d'un procédé de livraison d'impressions contenues dans les informations d'ordre d'impressions,
dans lequel ledit moyen de commande est apte à commander une séquence de production d'impressions sur ledit moyen de production d'impressions sur la base des informations du procédé de livraison d'impressions, de sorte que les impressions sont produites en continu conformément à des ordres d'impressions correspondant au même procédé de livraison d'impressions, en étant ainsi éjectées à chaque d'ordre d'impressions,
**caractérisé en ce que** ledit moyen de stockage (28) est également apte à stocker des informations montrant une séquence d'itinéraire de livraison déterminée au préalable pour des destinations de livraison d'impressions (20) et **en ce que**
ledit moyen de commande (30) est en outre apte à commander une séquence de production d'impressions sur ledit moyen de production d'impressions (34) sur la base desdites informations stockées montrant la séquence d'itinéraire de livraison, de sorte que les impressions sont produites à chaque d'ordre d'impressions suivant une séquence correspondant à la séquence d'itinéraire de livraison.

2. Appareil selon la revendication 1, dans lequel
ledit moyen de production d'impressions (34) est apte à produire une impression d'ordre enregistrant au moins des informations pour identifier un ordre d'impressions en réaction à la production d'impressions pour l'ordre d'impressions, et
ledit moyen de commande (30) est apte à modifier au moins un des contenus d'enregistrement et un format d'une impression d'ordre conformément aux informations du procédé de livraison d'impressions.

3. Appareil selon la revendication 1 ou 2, dans lequel ledit moyen de commande (30) est apte à emballer les impressions triées à chaque ordre d'impressions et à éjecter les impressions emballées.

4. Procédé de traitement de production d'impressions, comprenant les étapes consistant à :
recevoir des informations d'ordre d'impressions et des données d'image ;
produire des impressions correspondant aux informations d'ordre d'impressions et données d'image ;
trier les impressions produites à chaque ordre d'impressions, et
éjecter les impressions triées,
dans lequel la production et le tri d'impressions sont commandés sur la base d'informations d'un procédé de livraison d'impressions contenues dans les informations d'ordre d'impressions, et
dans lequel la production et le tri d'impressions sont exécutés sur la base des informations du procédé de livraison d'impressions, de sorte que les impressions sont produites en continu conformément à des ordres d'impressions correspondant au même procédé de livraison d'impressions, en étant ainsi éjectées à chaque ordre d'impressions,
**caractérisé en ce que** la production d'impressions est exécutée sur la base des informations montrant une séquence d'itinéraire de livraison déterminée au préalable pour des destinations de livraison d'impressions (20), de sorte que les impressions sont produites à chaque ordre d'impressions suivant une séquence correspondant à la séquence d'itinéraire de livraison.

5. Procédé de traitement de production d'impressions selon la revendication 4, comprenant les étapes consistant à :
produire une impression d'ordre enregistrant au moins des informations pour identifier un ordre d'impressions en réaction à la production d'impressions pour l'ordre d'impressions, et
dans lequel au moins un des contenus d'enregistrement et un format d'une impression d'ordre sont modifiés conformément aux informations du procédé de livraison d'impressions.

6. Procédé de traitement de production d'impressions selon la revendication 4 ou 5, dans lequel les impressions triées à chaque ordre d'impressions sont emballées, et les impressions emballées sont éjectées.
